# EUROPÄISCHE PATENTANMELDUNG

(11) **EP 3 882 289 A1**
(43) Veröffentlichungstag der Anmeldung: **22.09.2021**
(21) Anmeldenummer: 20163775.8
(22) Anmeldetag: 17.03.2020
(51) Int. Cl.: C08G 18/10, C08G 18/48, C08G 18/75, C08G 18/76, C08K 3/04, C09J 175/08

(54) **ZUSAMMENSETZUNGEN AUF BASIS VON SILAN-TERMINIERTEN POLYMEREN UND ACETYLEN-RUSS**

(71) Anmelder: SIKA TECHNOLOGY AG, 6340 Baar (CH)
(72) Erfinder: Mennecke, Klaas, 79807 Lottstetten (DE)
(74) Vertreter: Sika Patent Attorneys

(57) **Zusammenfassung**

Die vorliegende Erfindung betrifft eine Zusammensetzung, insbesondere zur Verwendung als Klebstoff, Dichtstoff, Beschichtung oder Vergussmasse, umfassend:
- mindestens ein Silangruppen-haltiges Polymer
- mindestens einen Acetylen-Russ als Füllstoff.

## Beschreibung

### Technisches Gebiet

Die Erfindung betrifft Zusammensetzungen, insbesondere zur Verwendung als Klebstoffe, Dichtstoffe, Beschichtung oder Vergussmassen, umfassend mindestens ein Silangruppen-haltiges Polymer und Russ. Weiter bezieht sich die Erfindung auf die Verwendungen von Russ zur Thixotropierung und/oder Erhöhung der Viskosität einer Zusammensetzung, ein Verfahren zum Verkleben einer Zusammensetzung sowie daraus erhältliche Artikel.

### Stand der Technik

Zusammensetzungen auf Basis silanfunktioneller oder Silangruppen-haltiger Polymere und deren Verwendung als Klebstoffe, Dichtstoffe, Vergussmassen oder Beschichtungen sind seit längerem bekannt und vielfach beschrieben.

Die EP 1 256 595 A1 (Sika AG) beschreibt beispielsweise eine Klebstoffzusammensetzung, die ein spezielles silanvernetzendes Polymer sowie feinteiliges beschichtetes Calciumcarbonat und Russ enthält. Bezogen auf 100 g Polymer sind von 20 bis 50 ml feinteiliges beschichtetes Calciumcarbonat und Russ vorhanden und das Volumen-Verhältnis von feinteiligem beschichtetem Calciumcarbonat und Russ liegt zwischen 70/30 und 30/70. Eine solche Klebstoffzusammensetzung zeichnet sich aus durch gute mechanische Eigenschaften, einen hohen elektrischen Durchgangswiderstand und eine gute Applizierbarkeit. Die beschriebenen Russe weisen eine Dichte von ca. 1.8 g/ml auf und verfügen über eine grosse Oberfläche. Konkret erwähnt ist Russ vom Typ "Printex 60" von Degussa Hüls. Bevor die Russe eingesetzt werden können, müssen diese getrocknet werden.

Die EP 3 002 314 A1 (Sika Technology AG) offenbart z.B. eine zweikomponentige Zusammensetzung enthaltend mindestens ein bei Raumtemperatur flüssiges Silangruppen-haltiges Polymer, mindestens ein Epoxid-Flüssigharz, mindestens ein Polyetheramin und mindestens ein Amino- oder Mercaptosilan. Die Zusammensetzung kann diverse organische oder anorganische Füllstoffe wie beispielsweise Flugaschen, Russ, Graphit und dergleichen enthalten.

Nachteilig bei den bekannten Russen ist aber die Tatsache, dass diese für die Verwendung in Zusammensetzungen auf Basis von Silangruppen-haltigen Polymeren üblicherweise in einem aufwändigen Prozess vorgetrocknet werden müssen. Zudem besteht bei bekannten Formulierungen hinsichtlich der mechanischer Eigenschaften, Adhäsion und Applizierbarkeit Verbesserungspotential.

### Darstellung der Erfindung

Aufgabe der vorliegenden Erfindung ist es daher, Zusammensetzungen, insbesondere Klebstoffe, Dichtstoffe, Beschichtungen oder Vergussmassen, auf Basis von Silangruppen-haltigen Polymeren zu Verfügung zu stellen, welche mit möglichst geringem Aufwand herstellbar sind und für praktische Anwendungen möglichst gute Eigenschaften aufweisen. Im Besonderen sollen Zusammensetzungen bereitgestellt werden, bei welchen nach Möglichkeit auf eine Vortrocknung von Komponenten verzichtet werden kann. Weiter sollen die Zusammensetzungen bereitgestellt werden, welche thixotropische Eigenschaften aufweisen, so dass diese z.B. aus Kartuschen appliziert werden können ohne nach dem Auftrag zu zerfliessen.

Überraschenderweise wird diese Aufgabe mit einer Zusammensetzung wie in Anspruch 1 beschrieben gelöst. Die Zusammensetzung enthält mindestens ein Silangruppen-haltiges Polymer sowie mindestens einen Acetylen-Russ als Füllstoff.

Im Vergleich zu entsprechenden Zusammensetzungen mit einem Silangruppen-haltigen Polymer mit anderen Russen, wie sie zum Teil aus dem Stand der Technik bekannt sind, sind die erfindungsgemässen Zusammensetzungen einfacher herstellbar. Dies insbesondere weil die Acetylen-Russe eine für die Verwendung im Zusammenhang mit Silangruppen-haltigen Polymeren ausreichend niedrige Wasseraufnahme bzw. Gleichgewichtsfeuchte aufweisen. Damit kann, ohne dass besondere Massnahmen bei der Lagerung des Russes notwendig wären, bei der Herstellung der Zusammensetzung auf einen vorgängigen Trocknungsschritt des Russes, wie er bei den meisten anderen Russen notwendig ist, verzichtet werden.

Zudem hat sich die Verwendung von Acetylen-Russ auch hinsichtlich der rheologischen und mechanischen Eigenschaften von damit formulierten Zusammensetzungen als vorteilhaft erwiesen. So lassen sich z.B. Klebstoffe, Dichtstoffe, Beschichtungen und Vergussmassen herstellen, welche für viele Anwendungen eine optimale Thixotropie und Viskosität aufweisen und zugleich problemlos aus Kartuschen auspressbar sind. Ebenso zeigen die Zusammensetzungen auf unterschiedlichen Substraten eine hohe Haftung.

Die erfindungsgemässen Zusammensetzungen sind äusserst flexibel einsetzbar. So können die Zusammensetzung beispielsweise als Klebstoffe, Dichtstoffe, Beschichtungen und Vergussmassen formuliert werden. Diese können sowohl als 1-komponentige Systeme als auch als 2-komponentige System bereitgestellt werden.

Besonders geeignet ist die erfindungsgemässe Zusammensetzung für die Formulierung von einkomponentigen, feuchtigkeitshärtenden, Silangruppen-haltigen Klebstoffen, welche insbesondere für die primerlose Verklebung von Autoscheibenklebstoff geeignet sind. Ebenfalls besonders geeignet ist die erfindungsgemässe Zusammensetzung für die Formulierung von zweikomponentigen Zusammensetzungen auf Basis einer Kombination aus einem Silangruppen-haltigem Polymer und Epoxidharz, welche z.B. zum Verkleben, Abdichten oder Beschichten von ganz unterschiedlichen Substratmaterialen geeignet sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung, insbesondere zur Verwendung als Klebstoff, Dichtstoff, Beschichtung oder Vergussmasse, umfassend:
- mindestens ein Silangruppen-haltiges Polymer
- mindestens einen Acetylen-Russ als Füllstoff.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Organosilan" oder kurz "Silan" eine organische Verbindung, welche mindestens eine Silangruppe aufweist.
Als "Aminosilan", "Mercaptosilan" oder "Hydroxysilan" werden Organosilane bezeichnet, die am organischen Rest zusätzlich zur Silangruppe eine Amino-, Mercapto- oder Hydroxylgruppe aufweisen.

Als "Silicium-Gehalt" eines Silangruppen-haltiges Polymers wird der Silicium-Gehalt des Polymers in Gewichts-% bezogen auf 100 Gewichts-% Polymer bezeichnet. Eine Verdünnung des Polymers mit Lösemittel oder Weichmacher wird dabei nicht als Bestandteil des Polymers gerechnet. Ebenfalls nicht zum Silicum-Gehalt eines Silangruppen-haltigen Polymers werden silanfunktionelle Additive wie z.B. haftvermittelnde Organosilane gerechnet, welche gegebenenfalls zusätzlich in der Zusammensetzung enthalten sein können. Solche Substanzen gelten nicht als Silangruppen-haltige Polymere im Sinne der Erfindung.
Als "NCO-Gehalt" eines Polymers wird der Gehalt des Polymers an Isocyanatgruppen in Gewichts-% bezeichnet.

Als "aromatisch" wird eine Isocyanatgruppe bezeichnet, welche direkt an ein aromatisches C-Atom gebunden ist.

Mit "Poly" beginnende Substanznamen wie Polyamin oder Polyol bezeichnen Substanzen, die formal zwei oder mehr der in ihrem Namen vorkommenden funktionellen Gruppen pro Molekül enthalten.

Als "Aminwasserstoff" werden die Wasserstoffatome von primären und sekundären Aminogruppen bezeichnet.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und in Anlehnung an DIN EN ISO 3219-1994 beschrieben bestimmt wird.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt, insbesondere mit Tetrahydrofuran als mobiler Phase und Brechungsindex-Detektor.

Als "lagerstabil" oder "lagerfähig" wird eine Substanz oder eine Zusammensetzung bezeichnet, die bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet.
Alle im Dokument erwähnten Industriestandards und Normen beziehen sich auf die zum Zeitpunkt der Einreichung der Erstanmeldung gültigen Fassungen. Gewichtsprozente (Gewichts-% oder Gew.%), bezeichnen Massenanteile eines Bestandteils eines Polymers oder einer Zusammensetzung, bezogen auf das gesamte Polymer oder die gesamte Zusammensetzung, falls nichts anderes angeben. Die Begriffe "Masse" und "Gewicht" werden im vorliegenden Dokument synonym benutzt.

Eine gestrichelte Linie in den Formeln in diesem Dokument stellt jeweils die Bindung zwischen einem Substituenten und dem zugehörigen Molekülrest dar.

Im vorliegenden Zusammenhang wird unter dem Begriff "Russ" Industrieruss verstanden. Dabei handelt es sich allgemein um gezielt hergestellten Kohlenstoff in Partikelform. Industrieruss besteht dabei aus Primärpartikeln, welche typischerweise eine Grösse von 10 bis 300 Nanometern aufweisen und zu Aggregaten und Agglomeraten zusammengelagert sind. Industrieruss kann gezielt mit speziellen Eigenschaften erzeugt werden, beispielsweise durch die Art des Herstellverfahrens und die dabei gewählten Prozessparameter, z.B. Druck, Temperatur und Rohstoff.

"Acetylen-Russ" wird auch "Acetylene black" genannt und stellt eine von vielen möglichen Russarten dar. Acetylen-Russ ist ein Russ, welcher erhältlich ist oder erhalten wurde durch unvollständige Verbrennung von Acetylen. Acetylen-Russ unterscheidet sich von anders hergestellten Russarten in chemischer und/oder physikalischer Hinsicht. Acetylen-Russ weist gegenüber anderen Russarten im Besonderen eine hohe Reinheit und elektrische Leitfähigkeit auf. Andere Russarten sind z.B. Gasruss, Ofenruss, Flammruss, Spaltruss, Channel-Russ oder Glanzruss.

Mit Vorteil weist der in der Zusammensetzung verwendete Acetylen-Russ die nachfolgenden Eigenschaften auf.

Bevorzugt ist der Kohlenstoffgehalt (C-Gehalt) des Acetylen-Russes > 98 Gew.-%, insbesondere > 99 Gew.-%, bevorzugt > 99.5 Gew.-%.

Ein Aschegehalt des Acetylen-Russes ist mit Vorteil < 0.1 Gew.-%, insbesondere < 0.03 Gew.-%, bevorzugt < 0.015 Gew.-%. Bestimmt wird der Aschegehalt nach ASTM D1506 - 15.

Besonders bevorzugt verfügt der Acetylen-Russ über einen Kohlenstoffgehalt > 99.5 Gew.-% und einen Schwefelgehalt < 0.05 Gew.-%.

Der in der Zusammensetzung verwendete Acetylen-Russ weist bevorzugt eine Ölabsorptionszahl (OAN) von > 150 ml/100 g, bevorzugt > 200 ml/100 g, weiter bevorzugt > 250 ml/100 g, im Speziellen > 300 ml/100 g, auf. Die Ölabsorptionszahl wird gemessen nach Norm ASTM D 2414 - 19.

Im Besonderen verfügt der Acetylen-Russ über eine Ölabsorptionszahl von 150 - 400 ml/100 g, bevorzugt 200 - 375 ml/100 g, im Speziellen 250 - 350 ml/100 g, 275 - 325 ml/100 g auf.

Bevorzugt weist der Acetylen-Russ eine BET-Oberfläche von < 115 m²/g, bevorzugt < 100 m²/g, besonders bevorzugt < 80 m²/g, auf. Die BET-Oberfläche wird nach Norm ASTM D6556 - 19a bestimmt.

Besonders bevorzugt verfügt der Acetylen-Russ über eine BET-Oberfläche von 20 - 115 m²/g, bevorzugt 30 - 100 m²/g, im Speziellen 50 - 90 m²/g, insbesondere 60 - 80 m²/g.

Die Schüttdichte des Acetylen-Russ beträgt insbesondere 0.02 - 0.6 g/cm³, bevorzugt 0.05 - 0.2 g/cm³, im Speziellen 0.07 - 1.2 g/cm³.

Im Besonderen weist der Acetylen-Russ in Luft mit einem Taupunkt von 12°C und einer Temperatur von 23°C eine Gleichgewichtsfeuchte von < 0.2 Gewichts-% auf. Die Gleichgewichtsfeuchte wird durch die allgemein bekannte Karl-Fischer-Titration bestimmt.

Bevorzugt weist der Acetylen-Russ zwei oder mehrere der vorstehend genannten Eigenschaften in Kombination auf. Im Besonderen verfügt der Acetylen-Russ zugleich über die genannten Ölabsorptionszahlen und die genannten BET-Oberflächen. Weiter bevorzugt verfügt der Acetylen-Russ zudem über die genannten Gleichgewichtsfeuchten, und bevorzugt auch über den genannten Kohlenstoffgehalt.

Falls die erfindungsgemässe Zusammensetzung zur Formulierung eines einkomponentigen Silangruppen-haltigen Klebstoffs eingesetzt wird, verfügt der Acetylen-Russ mit Vorteil über eine Ölabsorptionszahl von 150 - 400 ml/100 g, bevorzugt 200-375 ml/100 g, und zugleich über eine BET-Oberfläche von 30 - 100 m²/g, im Speziellen 50 - 90 m²/g, besonders bevorzugt von 60 - 80 m²/g. Des Weiteren ist es von Vorteil, wenn der Acetylen-Russ in diesem Fall auch die oben genannte Gleichgewichtsfeuchte aufweist.

Wenn die erfindungsgemässe Zusammensetzung zur Formulierung einer zweikomponentigen Zusammensetzungen auf Basis einer Kombination aus einem Silangruppen-haltigem Polymer und Epoxidharz eingesetzt wird, verfügt der Acetylen-Russ mit Vorteil über eine Ölabsorptionszahl von 250 - 350 ml/100 g, bevorzugt 275 - 325 g, und zugleich über eine BET-Oberfläche von 20 - 115 m²/g, im Speziellen 80 -115 m²/g. Des Weiteren ist es von Vorteil, wenn der Acetylen-Russ in diesem Fall auch die oben genannte Gleichgewichtsfeuchte aufweist.

Mit Vorteil weist der Acetylen-Russ einen Anteil am Gesamtgewicht der Zusammensetzung von 5 - 20 Gew.-%, bevorzugt 8 - 18 Gew.-%, im Speziellen 10 - 15 Gew.-%, auf. Damit werden optimale Eigenschaften erzielt.

Das Silangruppen-haltige Polymer ist bevorzugt bei Raumtemperatur flüssig.

Bevorzugt weist das Silangruppen-haltige Polymer im Mittel 1.3 bis 4, besonders bevorzugt 1.5 bis 3, insbesondere 1.7 bis 2.8, Silangruppen pro Molekül auf. Am meisten bevorzugt weist das Silangruppen-haltige Polymer im Mittel 1.7 bis 2.3 Silangruppen pro Molekül auf.

Bevorzugt weist das Silangruppen-haltige Polymer einem Silicium-Gehalt im Bereich von 0.7 bis 1.5 Gewichts-%, insbesondere 0.8 bis 1.2 Gewichts-% auf. Eine solche Zusammensetzung ermöglicht eine besonders vorteilhafte Kombination aus hoher Festigkeit und hoher Dehnbarkeit.

Bevorzugt weist das Silangruppen-haltige Polymer ein mittleres Molekulargewicht Mₙ im Bereich von 2'000 bis 30'000 g/mol, bevorzugt 4'000 bis 20'000 g/mol, auf.

Falls es sich um eine einkomponentige Zusammensetzung oder eine Zusammensetzung ohne Epoxid-Flüssigharz handelt, weist das Silangruppen-haltige Polymer bevorzugt ein mittleres Molekulargewicht Mₙ im Bereich von 12'000 bis 30'000 g/mol, bevorzugt 13'000 bis 20'000 g/mol, auf.

Falls es sich um eine Zusammensetzung handelt, welche zusätzlich ein Epoxid-Flüssigharz enthält weist das Silangruppen-haltige Polymer bevorzugt ein mittleres Molekulargewicht Mₙ im Bereich von 2'000 bis 10'000 g/mol, besonders bevorzugt 3'000 bis 8'000 g/mol, insbesondere 4'000 bis 7'000 g/mol, auf.

Bevorzugt weist das Silangruppen-haltige Polymer mehrheitlich Polyoxyalkylen-Einheiten, insbesondere Polyoxypropylen-Einheiten, auf.

Bevorzugt weist das Silangruppen-haltige Polymer Silangruppen der Formel (I) auf, 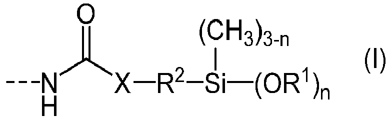 wobei
n für 1 oder 2 oder 3 steht, insbesondere für 2 oder 3,
R¹ für einen linearen oder verzweigten, einwertigen Kohlenwasserstoffrest mit 1 bis 5 C-Atomen steht,
R² für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere eine Amido-, Carbamat- oder Morpholinogruppe, aufweist, steht,
X für O oder S oder NR³ steht, wobei R³ für ein Wasserstoffatom oder einen linearen oder verzweigten Kohlenwasserstoff-Rest mit 1 bis 20 C-Atomen, welcher gegebenenfalls cyclische Anteile aufweist, und welcher gegebenenfalls eine Alkoxysilylgruppe oder Ether- oder Carbonsäureestergruppen aufweist, steht.

Bevorzugt steht n für 3. Eine solche Zusammensetzung härtet besonders schnell aus und ermöglicht besonders hohe Festigkeiten.

Bevorzugt steht R¹ für Methyl oder Ethyl oder Isopropyl.
Besonders bevorzugt steht R¹ für Methyl. Solche Silangruppen-haltige Polymere sind besonders reaktiv.

Weiterhin besonders bevorzugt steht R¹ für Ethyl. Solche Silangruppen-haltige Polymere sind besonders lagerstabil und toxikologisch vorteilhaft.

Bevorzugt steht X für O oder NR³.

Bevorzugt steht R³ für H, Butyl, Phenyl oder einen verzweigten aliphatischen Rest mit 6 bis 20 C-Atomen, welcher gegebenenfalls Ether- oder Carbonsäureestergruppen aufweist.

Am meisten bevorzugt steht X für NR³ und R³ für 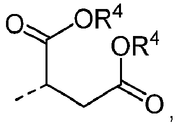 wobei R⁴ jeweils für Methyl oder Ethyl, insbesondere für Ethyl, steht. Solche Silangruppen-haltige Polymere sind einfach zugänglich und ermöglichen besonders hohe Festigkeiten bei hoher Dehnbarkeit und Beständigkeit.

Im Fall von X = NR³ steht R² bevorzugt für 1,3-Propylen oder für 1,4-Butylen, wobei Butylen mit einer oder zwei Methylgruppen substituiert sein kann, besonders bevorzugt für 1,3-Propylen.

Im Fall von X = O steht R² bevorzugt für einen zweiwertigen Kohlenwasserstoffrest mit 6 bis 12 C-Atomen, welcher eine Amido-, Carbamat- oder Morpholinogruppe aufweist, insbesondere für einen Rest der Formel

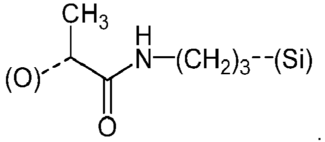

Die bevorzugten Silangruppen-haltigen Polymere ermöglichen Zusammensetzungen mit einer besonders attraktiven Kombination aus hoher Festigkeit bei hoher Dehnbarkeit.

Das Silangruppen-haltige Polymer wird bevorzugt erhalten aus der Umsetzung von mindestens einem Isocyanatgruppen-haltigen Polymer und mindestens einem Amino-, Mercapto- oder Hydroxysilan.

Das Isocyanatgruppen-haltige Polymer, vom welchem das Silangruppen-haltige Polymer abgeleitet ist, weist bevorzugt einen NCO-Gehalt im Bereich von 0.25 bis 4 Gewichts-% auf, insbesondere 0.3 bis 3.5 Gewichts-%, im Speziellen 0.4 bis 2.5 Gewichts-%, auf. Dies insbesondere wenn es sich bei der Zusammensetzung um eine einkomponentige Zusammensetzung oder eine Zusammensetzung ohne Epoxid-Flüssigharz handelt.

Falls es sich um eine Zusammensetzung handelt, welche ein Epoxid-Flüssigharz enthält weist das Isocyanatgruppen-haltige Polymer bevorzugt einen NCO-Gehalt im Bereich von 1.2 bis 4 Gewichts-%, insbesondere 1.2 bis 2.8 Gewichts-%, auf. Ein solches Isocyanatgruppen-haltiges Polymer ermöglicht einen erfindungsgemässen Silangruppen-Gehalt bei Umsetzung mit den bevorzugten Silanen.

Das Isocyanatgruppen-haltige Polymer wird seinerseits insbesondere erhalten aus der Umsetzung von mindestens einem Polyol und mindestens einem Diisocyanat. Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das molare NCO/OH-Verhältnis liegt bevorzugt im Bereich von 1.3/1 bis 2.5/1.

Als Polyol für die Herstellung des Isocyanatgruppen-haltigen Polymers geeignet sind bei Raumtemperatur flüssige Polyole, insbesondere die folgenden handelsübliche Polyole oder beliebige Mischungen davon:
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen.
   Bevorzugte Polyetherpolyole sind Polyoxypropylendiole oder Polyoxypropylentriole, oder sogenannte Ethylenoxid-terminierte (EO-capped) Polyoxypropylendiole oder -triole. Letztere sind Polyoxyethylenpolyoxypropylen-Mischpolyole, die insbesondere dadurch erhalten werden, dass Polyoxypropylendiole oder -triole nach Abschluss der Polypropoxylierungsreaktion mit Ethylenoxid weiter alkoxyliert werden und dadurch primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyetherpolyesterpolyole.
- Polyacrylat- und Polymethacrylatpolyole,
- Polyacrylat- oder Polymethacrylatpolyole.
- Polyhydroxyfunktionelle Fette oder Öle, beispielsweise natürliche Fette und Öle, inbesondere Ricinusöl; oder durch chemische Modifizierung von natürlichen Fetten und Ölen gewonnene - sogenannte oleochemische - Polyole.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen oder Isopren, insbesondere polyhydroxyfunktionelle Acrylonitril/ Butadien-Copolymere, wie sie insbesondere aus Epoxiden oder Aminoalkoholen und carboxylterminierten Acrylonitril/Butadien-Copolymeren (beispielsweise kommerziell erhältlich unter dem Namen Hypro® CTBN oder CTBNX oder ETBN von Emerald Performance Materials) hergestellt werden können; oder hydrierte polyhydroxyfunktionelle Polymere oder Copolymere von Dienen.

Bevorzugt sind Polyetherpolyole, insbesondere Polyoxyalkylendi- oder -triole.

Besonders bevorzugt sind Polyoxypropylendiole oder Polyoxypropylentriole, welche endständig gegebenenfalls Oxyethylengruppen aufweisen.

Bevorzugt sind Polyole mit einer mittleren OH-Funktionalität im Bereich von 1.6 bis 3, insbesondere Diole mit einer mittleren OH-Funktionalität im Bereich von 1.8 bis 2.

Bevorzugt sind Polyole mit einem mittleren Molekulargewicht Mₙ im Bereich von 1'000 bis 20'000 g/mol, insbesondere 2'000 bis 16'000 g/mol.

Bei der Herstellung eines Isocyanatgruppen-haltigen Polymers können auch Anteile von zwei- oder mehrfunktionellen Alkoholen mitverwendet werden.

Bevorzugt wird das Isocyanatgruppen-haltige Polymer erhalten aus der Umsetzung von mindestens einem Polyoxypropylendiol mit einer OH-Zahl im Bereich von 5 bis 58 mg KOH/g, insbesondere 6 bis 40 mg KOH/g, welches endständig gegebenenfalls Oxyethylengruppen aufweist, und mindestens einem Diisocyanat.

Gegebenenfalls wird bei der Herstellung des Isocyanatgruppen-haltigen Polymers mindestens ein weiteres Polyol mitverwendet, insbesondere ein Polyoxypropylentriol, welches endständig gegebenenfalls Oxyethylengruppen aufweist.

Als Diisocyanat für die Herstellung des Isocyanatgruppen-haltigen Polymers geeignet sind Diisocyanate mit aliphatischen Isocyanatgruppen, insbesondere 1,6-Hexandiisocyanat (HDI), 2,2(4),4-Trimethyl-1,6-hexamethylendiisocyanat (TMDI), Cyclohexan-1,3- oder -1,4-diisocyanat, 1-Isocyanato-3,3,5-trimethyl-5-isocyanatomethylcyclohexan (Isophorondiisocyanat oder IPDI), Perhydro-2,4'- oder -4,4'-diphenylmethandiisocyanat (HMDI), 1,3- oder 1,4-Bis(isocyanatomethyl)cyclohexan oder m- oder p-Xylylendiisocyanat (XDI), sowie Diisocyanate mit aromatischen Isocyanatgruppen, insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI) oder Naphthalin-1,5-diisocyanat (NDI), sowie Gemische der genannten Diisocyanate.

Davon bevorzugt sind HDI, IPDI, MDI oder TDI, insbesondere IPDI, MDI oder TDI, am meisten bevorzugt ist MDI oder TDI.

In einer bevorzugten Ausführungsform der Erfindung weist das Isocyanatgruppen-haltige Polymer aromatische Isocyanatgruppen auf. Ein damit erhaltenes Silangruppen-haltiges Polymer ermöglicht kostengünstige Zusammensetzungen mit besonders hoher Festigkeit.

Insbesondere sind die aromatischen Isocyanatgruppen abgeleitet von 4,4'-Diphenylmethandiisocyanat, gegebenenfalls mit Anteilen von 2,4'- und/oder 2,2'-Diphenylmethandiisocyanat (MDI), oder 2,4-Toluylendiisocyanat oder Gemischen davon mit 2,6-Toluylendiisocyanat (TDI).

Das Amino- oder Mercapto- oder Hydroxysilan für die Umsetzung mit dem Isocyanatgruppen-haltigen Polymer weist bevorzugt die Formel (II) auf, 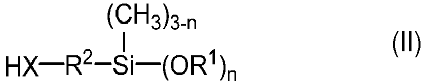 wobei n, R¹, R² und X die bereits genannten Bedeutungen aufweisen.

Geeignete Aminosilane für die Umsetzung mit dem Isocyanatgruppen-haltigen Polymer sind primäre oder sekundäre Aminosilane. Bevorzugt sind 3-Aminopropyltrimethoxysilan, 3-Aminopropyldimethoxymethylsilan, 4-Aminobutyl-trimethoxysilan, 4-Amino-3-methylbutyl-trimethoxysilan, 4-Amino-3,3-dimethylbutyl-trimethoxysilan, N-Butyl-3-aminopropyltrimethoxysilan, N-Phenyl-3-aminopropyl-trimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilyl-propyl)aminobernsteinsäurediethylester oder N-(3-Dimethoxymethylsilylpropyl)-aminobernsteinsäurediethylester. Ebenfalls geeignet sind Analoga der genannten Aminosilane mit Ethoxygruppen anstelle der Methoxygruppen am Silicium.

Geeignete Mercaptosilane für die Umsetzung mit dem Isocyanatgruppen-haltigen Polymer sind insbesondere 3-Mercaptopropyltrimethoxysilan, 3-Mercaptopropyldimethoxymethylsilan oder Analoga dieser Mercaptosilane mit Ethoxy-gruppen anstelle der Methoxygruppen am Silicium.

Geeignete Hydroxysilane für die Umsetzung mit dem Isocyanatgruppen-haltigen Polymer sind insbesondere erhältlich aus der Addition von Aminosilanen an Lactone, Lactide oder an cyclische Carbonate.

Bevorzugte Hydroxysilane dieser Art sind N-(3-Triethoxysilylpropyl)-2-hydroxy-propanamid, N-(3-Trimethoxysilylpropyl)-2-hydroxypropanamid, N-(3-Triethoxy-silylpropyl)-4-hydroxypentanamid, N-(3-Triethoxysilylpropyl)-4-hydroxyoctanamid, N-(3-Triethoxysilylpropyl)-5-hydroxydecanamid oder N-(3-Triethoxysilylpropyl)-2-hydroxypropylcarbamat.

Weitere geeignete Hydroxysilane sind erhältlich aus der Addition von Aminosilanen an Epoxide oder aus der Addition von Aminen an Epoxysilane.

Bevorzugte Hydroxysilane dieser Art sind 2-Morpholino-4(5)-(2-trimethoxysilyl-ethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Am meisten bevorzugt für die Umsetzung mit dem Isocyanatgruppen-haltigen Polymer ist ein Aminosilan, insbesondere N-(3-Trimethoxysilylpropyl)aminobernsteinsäurediethylester, N-(3-Dimethoxymethylsilylpropyl)aminobernsteinsäurediethylester oder N-(3-Triethoxysilylpropyl)aminobernsteinsäurediethylester.

Gemäss einer weiteren vorteilhaften Ausführungsform umfasst die Zusammensetzung weiter:
- mindestens ein Epoxid-Flüssigharz und
- mindestens ein Polyamin, bevorzugt mit mindestens drei gegenüber Epoxidgruppen reaktiven Aminwasserstoffen.

Als Epoxid-Flüssigharz geeignet sind übliche technische Epoxidharze, die bei Raumtemperatur fliessfähig sind und eine Glasübergangstemperatur unterhalb von 25°C aufweisen. Diese werden auf bekannte Art und Weise erhalten, insbesondere aus der Glycidylisierung von Verbindungen mit mindestens zwei aktiven Wasserstoffatomen, insbesondere Polyphenolen, Polyolen oder Aminen, durch Umsetzung mit Epichlorhydrin.

Geeignete Epoxid-Flüssigharze sind insbesondere aromatische Epoxid-Flüssigharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxy-naphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxid-Flüssigharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugt ist ein Epoxid-Flüssigharz auf der Basis eines Bisphenols.
Besonders bevorzugt ist ein Epoxid-Flüssigharz auf der Basis eines Bisphenol-A-, Bisphenol-F- oder Bisphenol-A/F-Diglycidylethers, wie sie kommerziell beispielsweise von Dow, Huntsman oder Momentive erhältlich sind. Diese Epoxid-Flüssigharze weisen eine gut handhabbare Viskosität auf und ermöglichen hohe Festigkeiten und Beständigkeiten. Solche Flüssigharze können auch Anteile von Bisphenol A-Festharz oder Phenol-Novolaken enthalten.

Bevorzugt liegt in der Zusammensetzung das Gewichtsverhältnis zwischen Silangruppen-haltigem Polymer und Epoxid-Flüssigharz im Bereich von 20/80 bis 70/30, insbesondere 25/75 bis 50/50. Eine solche Zusammensetzung weist eine hohe Festigkeit bei guter Dehnbarkeit auf.

Die Zusammensetzung umfasst weiterhin bevorzugt mindestens ein Polyamin, insbesondere mit mindestens drei gegenüber Epoxidgruppen reaktiven Aminwasserstoffen.

Geeignete sind insbesondere die folgenden Polyamine:
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)-cyclohexan, 1,4-Bis(aminomethyl)cyclohexan, 1-Amino-3-aminomethyl-3,5,5-trimethylcyclohexan (Isophorondiamin oder IPDA), 2(4)-Methyl-1,3-diaminocyclohexan, Bis(4-aminocyclohexyl)methan, Bis(4-amino-3-methylcyclohexyl)-methan, Bis(4-amino-3-ethylcyclohexyl)methan, Bis(4-amino-3,5-dimethylcyclohexyl)methan, Bis(4-amino-3-ethyl-5-methylcyclohexyl)methan, 2,5(2,6)-Bis-(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 1,3-Bis(aminomethyl)benzol (MXDA) oder 1,4-Bis(aminomethyl)-benzol;
- Ethergruppen-haltige aliphatische primäre Di- oder Triamine, insbesondere 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, 3,9-Bis(3-aminopropyl)-2,4,8,10-tetraoxaspiro[5.5]undecan, cycloaliphatische Ethergruppen-haltige Diamine aus der Propoxylierung und nachfolgenden Aminierung von 1,4-Dimethylolcyclohexan, erhältlich insbesondere als Jeffamine® RFD-270 (von Huntsman), oder Polyoxyalkylendi- oder -triamine, insbesondere Jeffamine® D-230, Jeffamine® D-400, Jeffamine® D-2000, Jeffamine® EDR-104, Jeffamine® EDR-148, Jeffamine® EDR-176, Jeffamine® T-403, Jeffamine® T-3000, Jeffamine® T-5000 (alle von Huntsman), oder entsprechende Amine von BASF oder Nitroil;
- sekundäre Aminogruppen aufweisende Polyamine mit zwei primären Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine, Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- tertiäre Aminogruppen aufweisende Polyamine, wie insbesondere 2-Aminoethylpiperazin, 3-Dimethylaminopropylamin (DMAPA), N,N-Dimethyldi(1,3-propylen)triamin (DMAPAPA), N,N'-Bis(aminoethyl)piperazin, N,N'-Bis(aminopropyl)piperazin, N,N-Bis(3-aminopropyl)methylamin, N,N-Bis(3-aminopropyl)-ethylamin;
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-aminopropyl)amin oder Tris(3-aminopropyl)amin; oder
- Diamine mit einer primären und einer sekundären Aminogruppe, insbesondere Produkte aus der reduktiven Alkylierung von primären aliphatischen Polyaminen mit Aldehyden oder Ketonen, wie insbesondere N-Benzyl-1,2-ethandiamin, N-Benzyl-1,2-propandiamin, N-Benzyl-1,3-bis(aminomethyl)benzol, N-2-Ethylhexyl-1,3-bis(aminomethyl)benzol, N-(2-Phenylethyl)-1,3-bis(aminomethyl)-benzol (Bestandteil von styrolisiertem 1,3-Bis(aminomethyl)benzol, erhältlich als Gaskamine® 240 von Mitsubishi Gas Chemical); oder
- Addukte der genannten Amine oder von kleinen Aminen wie insbesondere 1,2-Ethandiamin oder 1,2-Propandiamin mit Mono- oder Diepoxiden, insbesondere mit Kresylglycidylether oder Bisphenol-A Diglycidylether; oder
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere einem Polyalkylenamin wie beispielsweise DETA oder TETA; oder
- Mannich-Basen, insbesondere Phenalkamine, also Umsetzungsprodukte von Phenolen, insbesondere Cardanol, mit Aldehyden, insbesondere Formaldehyd, und Polyaminen.

Bevorzugt sind aliphatische, cycloaliphatische oder arylaliphatische Polyamine.

Bevorzugt sind Polyamine ausgewählt aus der Gruppe bestehend aus MPMD, TMD, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, IPDA, 2(4)-Methyl-1,3-diaminocyclohexan, Bis(4-aminocyclohexyl)methan, NBDA, MXDA, Polyoxypropylendiaminen und Polyoxypropylentriaminen mit mittlerem Molekulargewicht Mₙ im Bereich von 200 bis 500 g/mol, BHMT, TETA, TEPA, N4-Amin, DMAPAPA, N-Benzyl-1,2-ethandiamin, N-Benzyl-1,2-propandiamin, N-Benzyl-1,3-bis(aminomethyl)benzol, N-(2-Phenylethyl)-1,3-bis(aminomethyl)benzol und dem Addukt von MPMD oder 1,2-Propandiamin mit Kresylglycidylether.

Davon besonders bevorzugt ist 1,2-Diaminocyclohexan. Damit werden besonders hohe Festigkeiten erhalten.

Davon weiterhin besonders bevorzugt sind Polyoxypropylendi- oder -triamine mit mittlerem Molekulargewicht Mₙ im Bereich von 200 bis 500 g/mol, insbesondere Jeffamine® D-230, Jeffamine® D-400 oder Jeffamine® T-403. Damit werden besonders hohe Dehnungen erhalten.

Davon weiterhin besonders bevorzugt ist das Addukt von 1,2-Propandiamin mit Kresylglycidylether, insbesondere ortho-Kresylglycidylether, wobei die Adduktierung bevorzugt mit einem Überschuss an 1,2-Propandiamin gegenüber dem Kresylglycidylether durchgeführt und das nicht adduktierte 1,2-Propandiamin nach der Umsetzung mittels Destillation entfernt wird. Damit werden auch bei feuchten Bedingungen glänzende Oberflächen erhalten.

Es kann vorteilhaft sein, eine Mischung von zwei oder mehr Polyaminen einzusetzen. Bevorzugt sind Mischungen enthaltend mindestens ein Polyoxypropylendi- oder -triamin und mindestens ein weiteres Polyamin.

Bevorzugt liegt das Polyamin oder die Mischung von zwei oder mehr Polyaminen in einer solchen Menge vor, dass das Verhältnis der Anzahl Aminwasserstoffe zur Anzahl Epoxidgruppen im Bereich von 0.5 / 1 bis 1.5 / 1, insbesondere 0.8 / 1 bis 1.2 / 1, liegt.

Die erfindungsgemässe Zusammensetzung enthaltend das mindestens eine Epoxid-Flüssigharz und das mindestens eine Polyamin ist in einer bevorzugten Ausführungsform eine zweikomponentige Zusammensetzung und umfasst eine erste und eine zweiten Komponente, welche voneinander getrennt herstellt, verpackt und gelagert werden. Das Polyamin liegt dabei insbesondere nicht in der gleichen Komponente vor wie das Epoxid-Flüssigharz.

In diesem Fall ist es bevorzugt, wenn, bezogen auf das Gesamtgewicht des Acetylen-Russes in der Zusammensetzung, 30 - 70 Gew.-%, insbesondere 40 - 60 Gew.-%, des Acetylen-Russes in der ersten Komponente und 70 - 30 Gew.-%, insbesondere 60 - 40 Gew.-%, des Acetylen-Russes in der zweiten Komponente vorliegen.

In einer bevorzugten Ausführungsform der Erfindung umfasst die Zusammensetzung eine erste Komponente enthaltend
- mindestens ein Silangruppen-haltiges Polymer, wie vorgängig beschrieben, und
- mindestens ein Epoxid-Flüssigharz,
   und eine zweite Komponente enthaltend
- mindestens ein Polyamin, insbesondere mit mindestens drei gegenüber Epoxidgruppen reaktiven Aminwasserstoffen.

In einer weiteren bevorzugten Ausführungsform der Erfindung umfasst die Zusammensetzung eine erste Komponente enthaltend
- mindestens ein Silangruppen-haltiges Polymer, wie vorgängig beschrieben, und
- mindestens ein Polyamin, insbesondere mit mindestens drei gegenüber Epoxidgruppen reaktiven Aminwasserstoffen,
   und eine zweite Komponente enthaltend
- mindestens ein Epoxid-Flüssigharz.

Bei beiden Ausführungsformen sind die Komponenten für sich allein unter Ausschluss von Feuchtigkeit lagerstabil. Beim Vermischen der beiden Komponenten reagieren primäre und/oder sekundäre Aminogruppen mit vorhandenen Epoxidgruppen. Silangruppen reagieren unter Freisetzung von Alkohol, wenn sie mit Wasser in Kontakt kommen.

Die erfindungsgemässen Zusammensetzungen enthalten bevorzugt zusätzlich mindestens einen weiteren Bestandteil ausgewählt aus Aminosilanen, Trocknungsmitteln, Beschleunigern, Wasser, zusätzlichen Füllstoffen und Weichmachern. Dies gilt sowohl für Zusammensetzungen mit als auch für Zusammensetzungen ohne Epoxid-Flüssigharz und Polyamin.

Geeignete Aminosilane sind insbesondere 3-Aminopropyltrimethoxysilan, N-(2-Aminoethyl)-3-aminopropyltrimethoxysilan, N-(2-Aminoethyl)-N'-[3-(trimethoxysilyl)propyl]ethylendiamin, sowie deren Analoga mit Ethoxygruppen anstelle der Methoxygruppen am Silicium.
Das Aminosilan ist geeigneterweise in der gleichen Komponente wie das Polyamin, falls letzteres vorhanden ist.

Bevorzugt weist die Zusammensetzung einen Gehalt an Aminosilan im Bereich von 0.1 bis 5 Gewichts-%, insbesondere im Bereich von 0.2 bis 2 Gewichts-%, auf. Solche Zusammensetzungen weisen eine besonders hohe Festigkeit auf.

Geeignete Trockungsmittel sind insbesondere Tetraethoxysilan, Vinyltrimethoxysilan, Vinyltriethoxysilan, Organosilane, welche in α-Stellung zur Silangruppe eine funktionelle Gruppe aufweisen, insbesondere N-(Methyldimethoxysilylmethyl)-O-methylcarbamat oder (Methacryloxymethyl)silane, Methoxymethylsilane, Orthoameisensäureester, sowie Calciumoxid oder Molekularsiebe.

Besonders bevorzugt enthält die Zusammensetzung Vinyltrimethoxysilan oder Vinyltriethoxysilan. Dabei ist Vinyltrimethoxysilan für den Fall bevorzugt, dass das Silangruppen-haltige Polymer Methoxysilangruppen aufweist, während Vinyltriethoxysilan für den Fall bevorzugt ist, dass das Silangruppen-haltige Polymer Ethoxysilangruppen aufweist.

Das Trocknungsmittel ist geeigneterweise in der gleichen Komponente wie das Silangruppen-haltige Polymer.

Geeignete Beschleuniger sind insbesondere Substanzen, welche die Vernetzung von Silangruppen-haltigen Polymeren beschleunigen. Dafür geeignet sind insbesondere Metallkatalysatoren und/oder stickstoffhaltige Verbindungen.

Geeignete Metallkatalysatoren sind Verbindungen von Titan, Zirkonium, Aluminium oder Zinn, insbesondere Organozinn-Verbindungen, Organotitanate, Organozirkonate oder Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen. Besonders geeignet sind Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, sowie Organotitanate oder Organozirkonate.

Geeignete stickstoffhaltige Verbindungen sind insbesondere Amidine wie 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, oder Guanidine wie Tetramethylguanidin, 2-Guanidinobenzimidazol, Acetylacetonguanidin oder Umsetzungsprodukte aus Carbodiimiden und Aminen wie insbesondere Polyetheraminen oder Aminosilanen.

Geeignete Beschleuniger sind weiterhin insbesondere Substanzen, welche die Reaktion von Epoxidgruppen mit Aminogruppen beschleunigen. Dafür geeignet sind insbesondere Säuren oder zu Säuren hydrolysierbare Verbindungen, insbesondere organische Carbonsäuren wie Salicylsäure, organische Sulfonsäuren wie p-Toluolsulfonsäure, Sulfonsäureester, Phosphorsäure, oder Nitrate wie insbesondere Calciumnitrat, oder tertiäre Amine wie insbesondere 1,4-Diazabicyclo-[2.2.2]octan, Triethanolamin, Imidazole wie insbesondere N-Methylimidazol, N-Vinylimidazol oder 1,2-Dimethylimidazol, die genannten Amidine oder Guanidine, Phenole oder Mannich-Basen wie insbesondere 2,4,6-Tris(dimethylaminomethyl)-phenol, oder Mercaptogruppen aufweisende Verbindungen.

Bevorzugt enthält die Zusammensetzung mindestens einen Beschleuniger ausgewählt aus Dialkylzinnverbindungen, Organotitananten, Amidinen, Guanidinen, Säuren, Calciumnitrat und Mannich-Basen.

Besonders bevorzugt enthält die Zusammensetzung 2,4,6-Tris(dimethylaminomethyl)phenol und mindestens einen weiteren Beschleuniger.

In einer bevorzugten Ausführungsform der Erfindung enthält die Zusammensetzung Wasser oder eine Wasser freisetzende Substanz. Eine solche Zusammensetzung weist den Vorteil auf, dass das zur Vernetzung der Silangruppen notwendige Wasser nicht oder nur zum Teil aus der Umgebung aufgenommen werden muss.

Bevorzugt enthält die Zusammensetzung gesamthaft bis zu 5 Gewichts-%, insbesondere bis zu 2 Gewichts-%, freies oder freisetzbares Wasser.
Freies Wasser ist geeigneterweise nicht in der gleichen Komponente wie das Silangruppen-haltige Polymer.

Geeignete zusätzliche Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, weitere industriell hergestellte Russe, Graphit, Metall-Pulver, beispielsweise von Aluminium, Kupfer, Eisen, Silber oder Stahl, PVC-Pulver oder Leichtfüllstoffe wie Glashohlkugeln oder gasgefüllte Kunststoffhohlkugeln (microspheres), insbesondere die unter dem Handelsnamen Expancel® (von Akzo Nobel) erhältlichen Typen. Die als zusätzliche Füllstoffe einsetzbaren weiteren industriell hergestellten Russe unterscheiden sich dabei in chemischer und/oder physikalischer Hinsicht von den erfindungsgemäss verwendeten Acetylen-Russen wie sie vorstehend beschrieben sind.

Bevorzugt als zusätzliche Füllstoffe sind Calciumcarbonate, calcinierte Kaoline und/oder hochdisperse Kieselsäuren.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexandicarboxylat oder hydriertes Diisononylterephthalat bzw. Diisononyl-1,4-cyclohexandicarboxylat, Isophthalate, Trimellitate, Adipate, insbesondere Dioctyladipat, Azelate, Sebacate, Benzoate, Glykolether, Glykolester wie insbesondere Triethylenglykol-bis(2-ethyl-hexanoat), Weichmacher mit Polyetherstruktur, insbesondere Polypropylenoxidmonole, -diole oder -triole mit blockierten Hydroxylgruppen, insbesondere in der Form von Acetatgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Bevorzugte Weichmacher sind Phthalate, Glykolester oder Weichmacher mit Polyetherstruktur.

Die erfindungsgemässe Zusammensetzung kann weitere Zusätze enthalten, insbesondere
- weitere Vernetzer, insbesondere weitere Silane wie Epoxysilane oder Mercaptosilane, oder Mercaptogruppen aufweisende Verbindungen wie zum Beispiel Mercaptan-terminierte Polysulfid-Polymere oder Mercaptan-terminierte Polyoxyalkylen-Ether;
- Lösemittel oder Verdünner;
- anorganische oder organische Pigmente, insbesondere Titandioxid, Chromoxide oder Eisenoxide;
- Farbstoffe;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, Polyvinylchloride, pyrogene Kieselsäuren, Celluloseether oder hydrophob modifizierte Polyoxyethylene;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- Fasern, insbesondere Glasfasern, Kohlefasern, Metallfasern, Keramikfasern, Polymerfasern wie Polyamidfasern oder Polyethylenfasern, oder Naturfasern wie Wolle, Cellulose, Hanf oder Sisal;
- Nanofüllstoffe wie Graphen oder Carbon Nanotubes;
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris-(1,3-dichlor-2-propyl)phosphat, Tris(2-chlorethyl)phosphat, Tris(2-ethylhexyl)-phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate;
- Additive, insbesondere Emulgatoren, Netzmittel, Verlaufmittel, Entschäumer, Entlüfter, Stabilisatoren gegen Oxidation, Wärme, Licht oder UV-Strahlung oder Biozide.

Es kann sinnvoll sein, gewisse Bestandteile vor dem Einmischen in die Zusammensetzung chemisch oder physikalisch zu trocknen, insbesondere wenn sie zusammen mit dem Silangruppen-haltigen Polymer gelagert werden.

Bevorzugt enthält die erfindungsgemässe Zusammensetzung wenig Lösemittel. Insbesondere enthält sie weniger als 5 Gewichts-%, bevorzugt weniger als 2.5 Gewichts-%, Lösemittel. Am meisten bevorzugt ist sie im Wesentlichen frei von Lösemitteln.

Im Allgemeinen weist die erfindungsgemässe Zusammensetzung bevorzugt einen Gehalt an Silangruppen-haltigem Polymer im Bereich von 8 bis 65 Gewichts-%, insbesondere 12 bis 60 Gewichts-%, auf.

Eine erste besonders vorteilhafte Zusammensetzung verfügt über folgende Anteile der einzelnen Komponenten:
- 12 bis 60 Gewichts-% Silangruppen-haltiges Polymer,
- 5 bis 20 Gewichts-% Acetylen-Russ
- 0 bis 45 Gewichts-%, bevorzugt 1 bis 40 Gewichts-%, insbesondere 5 bis 30 Gewichts-%, weitere Füllstoffe,
und gegebenenfalls weitere Inhaltsstoffe, wobei die Gewichts-% jeweils bezogen auf die Gesamtzusammensetzung sind.

Eine zweite besonders vorteilhafte Zusammensetzung verfügt über folgende Anteile der einzelnen Komponenten:
- 12 bis 60 Gewichts-% Silangruppen-haltiges Polymer,
- 5 bis 20 Gewichts-% Acetylen-Russ
- 5 bis 20 Gewichts-% weitere Füllstoffe, insbesondere Calciumcarbonat
- 0 bis 5 Gewichts-%, bevorzugt 0.5 bis 3 Gewichts-%, insbesondere 1 bis 3 Gewichts-%, Aminosilan
- 0 bis 5 Gewichts-%, bevorzugt 0.5 bis 3 Gewichts-%, insbesondere 1 bis 3 Gewichts-%, Trockungsmittel, insbesondere Vinyltrimethoxysilan oder Vinyltriethoxysilan
und gegebenenfalls weitere Inhaltsstoffe, wobei die Gewichts-% jeweils bezogen auf die Gesamtzusammensetzung sind.

Die beiden ersten besonders vorteilhaften Zusammensetzungen werden bevorzugt als einkomponentige Zusammensetzungen hergestellt und eingesetzt. Bevorzugt enthalten die beiden ersten Zusammensetzungen kein Epoxid-Flüssigharz.

Bei den beiden ersten besonders vorteilhaften Zusammensetzung Zusammensetzungen handelt es sich insbesondere um feuchtigkeitshärtende Zusammensetzungen, die in Anwesenheit von Wasser, insbesondere in Form von Luftfeuchtigkeit, aushärten.

Entsprechend werden derartige Zusammensetzungen vorzugsweise unter Ausschluss von Feuchtigkeit hergestellt und aufbewahrt. Typischerweise ist die Zusammensetzung lagerstabil, das heisst, er kann unter Ausschluss von Feuchtigkeit in einer geeigneten Verpackung oder Anordnung, wie beispielsweise einem Fass, einem Hobbock, einem Beutel, einer Dose, einer Kartusche oder einer Tube, über einen Zeitraum von mehreren Monaten bis zu einem Jahr und länger aufbewahrt werden, ohne dass sie sich in ihren Anwendungseigenschaften oder in seinen Eigenschaften nach der Aushärtung in einem für ihren Gebrauch relevanten Ausmass verändert. Üblicherweise wird die Lagerstabilität über die Messung der Viskosität oder der Auspresskraft ermittelt.

Weitere vorteilhafte Zusammensetzungen enthalten zusätzlich ein Epoxid-Flüssigharz und ein Polyamin und verfügen bevorzugt über folgende Anteile:
Eine Zusammensetzung mit zusätzlichem Epoxid-Flüssigharz und einem Polyamin weist bevorzugt einen Gehalt an Silangruppen-haltigem Polymer im Bereich von 10 bis 50 Gewichts-%, insbesondere 12 bis 40 Gewichts-%, auf. Bei zweikomponentigen Systemen ist der Gehalt dabei bezogen auf die Gesamtmasse der beiden Komponenten.

Eine Zusammensetzung mit zusätzlichem Epoxid-Flüssigharz und einem Polyamin weist bevorzugt einen Gehalt an Epoxid-Flüssigharz im Bereich von 10 bis 60 Gewichts-%, insbesondere 20 bis 50 Gewichts-%, auf. Bei zweikomponentigen Systemen ist der Gehalt dabei bezogen auf die Gesamtmasse der beiden Komponenten.

Eine Zusammensetzung mit zusätzlichem Epoxid-Flüssigharz und einem Polyamin weist bevorzugt einen Gehalt an der Summe aus Epoxid-Flüssigharz und Epoxidgruppen-haltigem Reaktivverdünner im Bereich von 20 bis 70 Gewichts-%, insbesondere 25 bis 65 Gewichts-%, auf.

Eine dritte besonders vorteilhafte Zusammensetzung umfasst:
- 12 bis 40 Gewichts-% Silangruppen-haltiges Polymer,
- 5 bis 20 Gewichts-% Acetylen-Russ
- 20 bis 50 Gewichts-% Epoxid-Flüssigharz,
- 0 bis 20 Gewichts-%, bevorzugt 1 bis 15 Gewichts-%, Epoxidgruppen-haltiger Reaktivverdünner,
- 5 bis 40 Gewichts-% Polyamin,
- 0 bis 45 Gewichts-%, bevorzugt 1 bis 40 Gewichts-%, weitere Füllstoffe,
und gegebenenfalls weitere Inhaltsstoffe, wobei die Gewichts-% jeweils bezogen auf die Gesamtzusammensetzung sind.

Die Zusammensetzungen mit Epoxid-Flüssigharz und einem Polyamin werden bevorzugt als zweikomponentige Zusammensetzung hergestellt und eingesetzt. Dabei werden die erste und die zweite Komponente der Zusammensetzung getrennt voneinander hergestellt und in einem feuchtigkeitsdichten Gebinde gelagert. Ein geeignetes Gebinde ist insbesondere ein Fass, ein Hobbock, ein Beutel, ein Eimer, eine Dose, eine Kartusche oder eine Tube.

Zur Anwendung von zweikomponentigen Zusammensetzung werden die beiden Komponenten kurz vor oder während der Applikation miteinander vermischt. Das Mischungsverhältnis wird dabei bevorzugt so gewählt, dass die gegenüber Epoxidgruppen reaktiven Gruppen in einem geeigneten Verhältnis zu den Epoxidgruppen stehen, wie vorgängig beschrieben. In Gewichtsteilen liegt das Mischungsverhältnis üblicherweise im Bereich von 1:10 bis 10:1.

Das Vermischen der beiden Komponenten erfolgt mittels eines geeigneten Verfahrens; es kann kontinuierlich oder batchweise erfolgen, über einen Statikmischer oder mit Hilfe eines dynamischen Mischers. Falls das Vermischen vor der Applikation erfolgt, muss darauf geachtet werden, dass die Applikation innerhalb der Topfzeit der Zusammensetzung erfolgt, da es sonst zu Störungen, wie beispielsweise einem verlangsamten oder unvollständigen Aufbau der Haftung zum Substrat oder vorzeitigem Gelieren, kommen kann.

Als "Topfzeit" wird dabei die Zeit bezeichnet, innerhalb welcher die Zusammensetzung nach dem Vermischen der Komponenten appliziert sein soll.
Das Vermischen der Komponenten erfolgt bevorzugt bei Umgebungstemperatur, welche typischerweise im Bereich von etwa 0 bis 50°C, bevorzugt bei etwa 5 bis 35°C, liegt.

Mit dem Vermischen der beiden Komponenten beginnt die Aushärtung durch chemische Reaktion. Dabei reagieren Epoxidgruppen mit Aminwasserstoffen, und Silangruppen hydrolysieren unter Freisetzung von Alkohol, wobei Silanolgruppen (Si-OH-Gruppen) und durch nachfolgende Kondensationsreaktionen Siloxangruppen (Si-O-Si-Gruppen) gebildet werden. Als Ergebnis dieser und gegebenenfalls weiterer Reaktionen härtet die Zusammensetzung zu einem vernetzten Kunststoff aus. Falls das Wasser für die Hydrolyse der Silangruppen nicht bereits in der Zusammensetzung vorhanden war kann es aus der Luft (Luftfeuchtigkeit) oder einem Substrat stammen, oder die Zusammensetzung kann mit einer Wasser enthaltenden Komponente in Kontakt gebracht werden, zum Beispiel durch Bestreichen, Besprühen oder Einmischen.

Die Aushärtung erfolgt insbesondere bei einer Temperatur im Bereich von 0 bis 150°C. Sie kann insbesondere bei Umgebungstemperatur erfolgen, wobei sie sich typischerweise über einige Tage bis Wochen erstreckt, bis sie unter den gegebenen Bedingungen weitgehend abgeschlossen ist. In gewissen Fällen kann es vorteilhaft sein, eine bei Umgebungstemperatur teilgehärtete Zusammensetzung bei einer erhöhten Temperatur nachzuhärten.

Die Applikation der beschriebenen Zusammensetzungen erfolgt auf mindestens ein Substrat, wobei die Folgenden besonders geeignet sind:
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Beton, Mörtel, Zementestrich, Faserzement, Backstein, Ziegel, Gips oder Natursteine wie Granit oder Marmor;
- Asphalt oder Bitumen;
- beschichtete oder lackierte Substrate, insbesondere lackierte Fliesen, gestrichener Beton, pulverbeschichtete Metalle oder Legierungen oder lackierte Bleche;
- Reparatur- oder Nivelliermassen auf Basis PCC (Polymer-modifizierter Zementmörtel) oder ECC (Epoxidharz-modifizierter Zementmörtel);
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Glas oder Glaskeramik;
- Isolierschäume, insbesondere aus EPS, XPS, PUR, PIR, Steinwolle, Glaswolle oder geschäumtem Glas (Foamglas).

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Aushärtung der beschriebenen Zusammensetzungen wird eine ausgehärtete Zusammensetzung erhalten.

Die ausgehärtete Zusammensetzung weist eine hohe Festigkeit, eine hohe Dehnbarkeit und einen hohen Weiterreisswiderstand auf.
Die beschriebene Zusammensetzung wird bevorzugt verwendet als Klebstoff, Dichtstoff, Beschichtung oder Vergussmasse, insbesondere auf mindestens einem Metall wie insbesondere Stahl oder Aluminium, bevorzugt Aluminium.

Bei der Verwendung auf mindestens einem Metall besteht der Vorteil, dass das Metall durch die Zusammensetzung vor Korrosion geschützt ist. Somit wird die Haftung auch bei Belastung mit beispielsweise Salzwasser nicht durch Metallkorrosion geschwächt. Insbesondere kann uneloxiertes Aluminium ohne Verwendung eines Primers verklebt werden, wobei die Haftung auch bei Salzwasserbelastung nicht durch Korrosion geschwächt wird.

Besonders bevorzugt wird die beschriebene Zusammensetzung verwendet als zähelastischer Klebstoff. Typischerweise weist sie dabei nach dem Vermischen der Komponenten eine flüssige oder pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die Substrate innerhalb der Offenzeit des Klebstoffs zu einer Verklebung gefügt.
Als "Offenzeit" eines Klebstoffs wird die für eine kraftschlüssige Verbindung maximal mögliche Zeitspanne zwischen der Applikation des Klebstoffs und dem Fügen der zu verklebenden Teile bezeichnet.

Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie oder für das Verkleben von Bauteilen in der Fertigungsindustrie.

Ein weiterer Gegenstand der Erfindung ist somit ein Verfahren zum Verkleben, dadurch gekennzeichnet, dass die Zusammensetzung oder im Falle einer zweikomponentigen Zusammensetzung die vermischte Zusammensetzung innerhalb der Topfzeit auf mindestens eines der zu verklebenden Substrate appliziert wird und die Substrate innerhalb der Offenzeit zu einer Verklebung gefügt werden, gefolgt von der Aushärtung der Zusammensetzung. Bevorzugt ist dabei mindestens eines der Substrate ein Metall, insbesondere Aluminium oder Stahl, besonders bevorzugt Aluminium.

Bevorzugt wird die beschriebene Zusammensetzung weiterhin verwendet als Beschichtung, insbesondere als Beschichtung für Metalle wie insbesondere Stahl oder Aluminium, wobei die Zusammensetzung das Metall vor Korrosion schützt.

Bevorzugt wird die beschriebene Zusammensetzung weiterhin verwendet als Vergussmasse für das Verfüllen von Hohlräumen wie Rissen, Spalten oder Bohrlöchern, wobei die vermischte Zusammensetzung in den Hohlraum gefüllt oder injiziert wird und nach der Aushärtung diesen ausfüllt und die Flanken des Hohlraums zähelastisch miteinander verbindet, wobei auch auf nassem Untergrund eine hervorragende Haftung entsteht. Somit können Strassen, Plätze oder Terassen mit Schäden auf der Fläche oder an Randsteinen, Borten oder Begrenzungen, sowie Mauern oder sonstige Bauwerke, auf einfache Weise dauerhaft repariert werden, wobei die reparierten Stellen auch gegenüber starken Belastungen sehr beständig sind.

Falls gewünscht, kann beim Verfüllen von Hohlräumen ein sogenannter Anker in den Hohlraum eingefügt werden, zum Beispiel ein Armierungseisen, ein Gewindestab oder ein Bolzen.

Ein weiterer Gegenstand der Erfindung ist somit ein Verfahren zum Beschichten von Substraten oder zum Füllen von Hohlräumen, insbesondere Rissen oder Spalten, dadurch gekennzeichnet, dass die Zusammensetzung oder im Falle einer zweikomponentigen Zusammensetzung die vermischte Zusammensetzung innerhalb der Topfzeit auf ein Substrat aufgebracht oder in einen Hohlraum gefüllt wird und dort aushärtet. Gegebenenfalls kann beim Füllen von Hohlräumen ein Anker in den Hohlraum eingefügt werden, solange die Zusammensetzung noch fliessfähig ist.

Aus der Applikation und Aushärtung der beschriebenen Zusammensetzung bzw. aus dem Verfahren zum Verkleben oder dem Verfahren zum Beschichten von Substraten oder zum Füllen von Hohlräumen wird ein Artikel erhalten. Dieser Artikel kann ein Bauwerk oder ein Teil davon sein, insbesondere eine Strasse, ein Platz, eine Terrasse, ein Randstein, eine Borte, eine Begrenzung oder eine Mauer, oder er kann ein industrielles Gut oder ein Konsumgut sein, insbesondere ein Fahrzeug oder ein Teil davon, insbesondere die Box einer Fahrzeugbatterie.

Ein weiterer Gegenstand der Erfindung ist somit ein Artikel, erhalten aus der beschriebenen Verwendung oder dem beschriebenen Verfahren zum Verkleben oder Füllen von Hohlräumen.

Die erfindungsgemässe Zusammensetzung verfügt über vorteilhafte Eigenschaften, insbesondere eine gute Lagerstabilität, schnelle Aushärtung, auch bei Nässe oder Feuchtigkeit, eine überraschend hohe Festigkeit bei hoher Dehnbarkeit, einen hohen Weiterreisswiderstand, hohe Beständigkeit und hohe Haftkräfte auf vielen Substraten, wobei die Zusammensetzung bei der Verwendung auf Metallen wie Stahl oder Aluminium diese vor Korrosion schützt. Somit ermöglicht die Zusammensetzung eine zuverlässige Verklebung von unbehandeltem Aluminium unter korrosiven Bedingungen.

Ein weiterer Aspekt der vorliegenden Erfindung bezieht sich auf die Verwendung von Acetylen-Russ als Füllstoff in einer Zusammensetzung, insbesondere einem Klebstoff, umfassend mindestens ein Silangruppen-haltiges Polymer. Wie vorstehend beschrieben, ist Acetylen-Russ gegenüber anderen Russen besonders vorteilhaft.

Der Acetylen-Russ wird insbesondere zur Thixotropierung oder zur Erhöhung der Thixotropie der Zusammensetzung eingesetzt.

Weiter betrifft die Erfindung die Verwendung von Acetylen-Russ zur Erhöhung der Viskosität einer Zusammensetzung umfassend mindestens ein Silangruppen-haltiges Polymer. Dabei handelt es sich im Besonderen um Zusammensetzungen, wie sie vorstehend beschrieben sind, im Speziellen um Zusammensetzungen gemäss den drei als ganz besonders bevorzugt beschriebenen Ausführungsformen. Der Acetylen-Russ weist dabei bevorzugt die vorstehend beschriebenen Eigenschaften auf.

### Kurze Beschreibung der Zeichnung

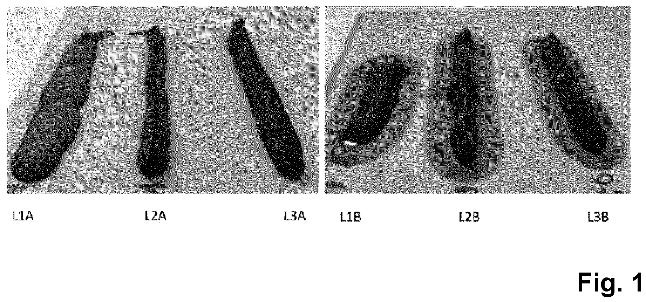

Fig. 1 zeigt Abbildungen von Klebstoffraupen, welche durch Austragen der einzelnen Komponenten von erfindungsgemässen zweikomponentigen Zusammensetzungen mit Acetylen-Russ hergestellt wurden **(L2A, L3A, L2B** und **L3B).** Als Vergleich sind Abbildungen von Klebstoffraupen aus nicht-erfindungsgemässen zweikomponentigen Zusammensetzungen gezeigt **(L1A** und **L1B).**

### Ausführungsbeispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" (NK) wird eine Temperatur von 23±1 °C und eine relative Luftfeuchtigkeit von 50±5% bezeichnet.

Die verwendeten Chemikalien waren, sofern nicht anders bezeichnet, von Sigma-Aldrich Chemie GmbH.

Vergleichsbeispiele sind mit **(Ref.)** gekennzeichnet.

### Herstellung von N-(3-Trimethoxysilyl-propyl)-amino-bernsteinsäure-diethylester

N-(3-Trimethoxysilyl-propyl)-amino-bernsteinsäure-diethylester wurde wie folgt hergestellt: 51.0 g 3-Aminopropyl-trimethoxysilan (Silquest® A-1110, Momentive Performance Materials Inc., USA) wurden vorgelegt. Unter gutem Rühren wurden bei Raumtemperatur langsam 49.0 g Maleinsäure-diethylester (Fluka Chemie GmbH, Schweiz) zugegeben und die Mischung während 2 Stunden bei Raumtemperatur gerührt.

### Herstellung eines ersten Silangruppen-haltigen Polymers STP1

Unter Feuchtigkeitsausschluss wurden 1000 g Polyol Acclaim® 12200 (von Covestro; low monol Polyoxypropylendiol, OH-Zahl 11.0 mg KOH/g, Wassergehalt ca. 0.02 Gew.-%), 43.6 g Isophorondiisocyanat (Vestanat® IPDI von Evonik Industries), 126.4 g Diisodecylphthalat und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilylpropyl)amino-bernsteinsäure-diethylester eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

### Herstellung eines zweiten Silangruppen-haltigen Polymers STP2

400 g Polyoxypropylen-Diol (Acclaim® 4200, von Covestro AG; OH-Zahl 28.5 mg KOH/g) und 52 g 4,4'-Diphenylmethandiisocyanat (Desmodur® 44 MC L, von Covestro AG) wurden nach bekanntem Verfahren bei 80 °C zu einem bei Raumtemperatur flüssigen, NCO-terminierten Polymer mit einem Isocyanatgruppen-Gehalt von 1.85 Gewichts-% umgesetzt. Anschliessend wurden 72 g g N-(3-Trimethoxysilylpropyl)amino-bernsteinsäure-diethylester eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

### Verwendete Russe

Es wurden die folgenden Russe gemäss Tabelle 1 eingesetzt:

**Tabelle 1: Verwendete Russe**

| Typ → | Printex 60¹⁾ | Y50A²⁾ | Y200²⁾ | YS²⁾ |
|---|---|---|---|---|
| Eigenschaft ↓ | | | | |
| BET-Oberfläche [m²/g] | 115 | 70 | 70 | 110 |
| OAN [ml/100 g] | 118 | 301 | 212 | 330 |
| Gleichgewichtsfeuchte⁺ [Gew.-%] | < 1.5 | 0.015 | 0.147 | 0.085 |
| Aschengehalt [Gew.-%] | 0.1 | < 0.01 | < 0.5 | < 0.01 |
| Schwefelgehalt | - | < 0.05 | < 0.05 | < 0.05 |

| | | | | |
|---|---|---|---|---|
| ¹⁾ Ofenruss (erhältlich bei Orion Engineered Carbons LLC) ²⁾ Acetylenruss (erhältlich bei Orion Engineered Carbons LLC) ⁺ in Luft mit einem Taupunkt von 12°C und einer Temperatur von 23°C | | | | |

Russ vom Typ Printex 60 wurde vor der Anwendung während 12 Stunden bei 110°C getrocknet, danach unter Stickstoffatmosphäre auf RT abgekühlt und direkt in den Zusammensetzungen eingesetzt. Die anderen Russtypen wurden ohne Trocknungsschritt direkt eingesetzt.

### Herstellung von einkomponentigen Zusammensetzungen

Für jede der Zusammensetzung **Z1 - Z4** wurden die in Tabelle 1 angegebenen Inhaltsstoffe in den angegebenen Mengen (in Gewichtsteilen) mittels eines Zentrifugalmischers (SpeedMixer™ DAC 150, FlackTek Inc.) vermischt und unter Ausschluss von Feuchtigkeit aufbewahrt.

Die Beispiele **Z1** bis **Z3** sind erfindungsgemässe Beispiele, bei welchen erfindungsgemässe Acetylenrusse (Y50A, YS oder Y200) eingesetzt wurden. Das Beispiel **Z4** ist ein Vergleichsbeispiel mit Ofenruss (Printex 60).

**Tabelle 2: Einkomponentige STP-Zusammensetzungen**

| Beispiel → | **Z1** | **Z2** | **Z3** | **Z4 (Ref.)** |
|---|---|---|---|---|
| Bestanteile ↓ | | | | |
| Polymer **STP1** | 56.0 | 56.0 | 56.0 | 56.0 |
| Vinyltrimethoxysilan | 1.0 | 1.0 | 1.0 | 1.0 |
| Jayflex DIDP¹⁾ | 16.6 | 16.6 | 16.6 | 16.6 |
| Calciumcarbonat mit Stearatcoating²⁾ | 12.7 | 12.7 | 12.7 | 12.7 |
| Russ Printex 60 | | | | 11.0 |
| Russ Y50A | 11.0 | | | |
| Russ YS | | 11.0 | | |
| Russ Y200 | | | 11.0 | |
| Silquest® A-1120³⁾ | 1.0 | 1.0 | 1.0 | 1.0 |
| Katalysator⁴⁾ | 1.7 | 1.7 | 1.7 | 1.7 |

| | | | | |
|---|---|---|---|---|
| ¹⁾ Weichmacher, Diisodecyl-Phthalat (von Exxon Mobil) ²⁾ Socal U1S2 (Solvay) ³⁾ N(β-aminoethyl)γ-aminopropyitrimethoxy-silane (von Momentive) ⁴⁾ 10 Gew.-% Dibutylzinndilaurat (DBTL) gelöst in Jayflex DIDP | | | | |

Für die Bestimmung der **Topfzeit** wurde eine Menge von 50 g der frisch vermischten Zusammensetzung in einem 500 ml Becher mit einem Spatel in einem Abstand von 5 min umgerührt, bis die Zusammensetzung gefühlsmässig so stark angedickt hatte, dass sie nicht mehr gut verarbeitbar war.

Zur Bestimmung der mechanischen Eigenschaften wurde die vermischte Zusammensetzung auf eine PTFE-beschichtete Folie zu einem Film von 2 mm Dicke ausgegossen und im Normklima gelagert. Nach 1 Tag wurden einige hantelförmige Prüfkörper mit einer Länge von 75 mm bei einer Steglänge von 30 mm und einer Stegbreite von 4 mm aus dem Film ausgestanzt und während weiteren 6 Tagen im Normklima gelagert. Anschliessend wurden diese wie in DIN EN 53504 beschrieben bei einer Zuggeschwindigkeit von 2 mm/min die **Zugfestigkeit** (Bruchkraft), **Bruchdehnung** und der Elastizitätsmodul (**E-Modul**) bestimmt.

Ebenso wurden einige Prüfkörper zur Bestimmung des **Weiterreisswiderstandes** ausgestanzt und gelagert und gemäss DIN ISO 34 bei einer Zuggeschwindigkeit von 500 mm/min geprüft.

Die **Auspresskraft** aus einer Kartusche durch eine Öffnung mit 5 mm Durchmesser wurde nach einem Tag bei Raumtemperatur gemessen.

Die **Stabilität der Thixotropie** wurde anhand der Standfestigkeit von prismatischen Klebstoffraupen (Breite ca. 10 mm; Höhe ca. 20 mm, siehe Fig. 1) visuell beurteilt. Dabei wurde geprüft, ob sich die Zusammensetzung leicht auftragen lässt und ob die Klebstoffraupe nach dem Aufragen ihre prismatische Form behält. Falls ja, wurde dies als stabile Thixotropie eingestuft. Der andere Fall bzw. wenn die Klebstoffraupe nach dem Auftragen zerfliesst, wird als nicht stabile Thixotropie bezeichnet.

Diese Resultate sind in der Tabellen 3 angegeben.

**Tabelle 3: Eigenschaften der Zusammensetzungen**

| Beispiel → | **Z1** | **Z2** | **Z3** | **Z4 (Ref.)** |
|---|---|---|---|---|
| Eigenschaft ↓ | | | | |
| Zugfestigkeit [MPa] | 3.23 | 3.58 | 2.95 | 3.06 |
| Bruchdehnung [%] | 302 | 250 | 258 | 260 |
| Weiterreisswiderstand [N/mm] | 4.89 | 5.92 | 4.56 | 4.65 |
| E-Modul 0-5% [MPa] | 2.36 | 2.87 | 2.11 | 1.82 |
| E-Modul 0-25% [MPa] | 1.88 | 2.22 | 1.65 | 1.33 |
| E-Modul 0-50% [MPa] | 1.62 | 1.93 | 1.40 | 1.10 |
| E-Modul 0-100% [MPa] | 1.41 | 1.74 | 1.22 | 0.99 |
| Auspresskraft [N] | 524 | 1'043 | 326 | 718 |
| Shore A (nach 7 Tagen bei RT) (DIN 53505:2000) | 48 | 51 | 44 | 41 |
| Stabile Thixotropie | Ja | Ja | Ja | Nein |

Der Hauptunterschied der Zusammensetzungen liegt im thixotrope Verhalten und der Extrusionskraft für die verschiedenen Russarten. Während die Referenz (Beispiel **Z4**) selbstausgleichendes Verhalten zeigt, werden mit den Acetylenrussen (Beispiele **Z1 - Z3**) bessere Anwendungseigenschaften bzw. stabile Thixotropien bei ausreichend geringen Auspresskräften erreicht.

Weiter wurden die Zusammensetzung **Z5** - **Z10** hergestellt. Dabei wurden die in Tabelle 4 angegebenen Inhaltsstoffe in den angegebenen Mengen (in Gewichtsteilen) mittels eines Zentrifugalmischers (SpeedMixer™ DAC 150, FlackTek Inc.) vermischt und unter Ausschluss von Feuchtigkeit aufbewahrt.

Die Beispiele **Z5** bis **Z10** sind erfindungsgemässe Beispiele, bei welchen erfindungsgemässe Acetylenrusse (Y50A, YS oder Y200) mit grösseren Anteilen eingesetzt wurden.

**Tabelle 4: Einkomponentige STP-Zusammensetzungen mit erhöhtem Russgehalt**

| Beispiel → | **Z5** | **Z6** | **Z7** | **Z8** | **Z9** | **Z10** |
|---|---|---|---|---|---|---|
| Bestanteile ↓ | | | | | | |
| Polymer **STP1** | 56.0 | 56.0 | 56.0 | 56.0 | 56.0 | 56.0 |
| Vinyltrimethoxysilan | 0.5 | 0.5 | 0.5 | 0.5 | 0.5 | 0.5 |
| Jayflex DIDP¹⁾ | 15.1 | 15.1 | 15.1 | 13.10 | 13.10 | 13.10 |
| Calciumcarbonat mit Stearatcoating²⁾ | 12.7 | 12.7 | 12.7 | 12.7 | 12.7 | 12.7 |
| Russ Y50A | 13.0 | | | 15.0 | | |
| Russ YS | | | 13.0 | | | 15.0 |
| Russ Y200 | | 13.0 | | | 15.0 | |
| Silquest® A-1120³⁾ | 1.0 | 1.0 | 1.0 | 1.0 | 1.0 | 1.0 |
| Katalysator⁴⁾ | 1.7 | 1.7 | 1.7 | 1.7 | 1.7 | 1.7 |

| | | | | | | |
|---|---|---|---|---|---|---|
| ¹⁾ Weichmacher, Diisodecyl-Phthalat (von Exxon Mobil) ²⁾ Socal U1S2 (Solvay) ³⁾ N(β-aminoethyl) γ-aminopropyltrimethoxy-silane (von Momentive) ⁴⁾ 10 Gew.-% Dibutylzinndilaurat (DBTL) gelöst in Jayflex DIDP | | | | | | |

Die Eigenschaften der Zusammensetzungen **Z5** - **Z10** wurden wie für die Zusammensetzungen **Z1 - Z4** beschrieben bestimmt. Die Resultate sind in der Tabellen 5 angegeben.

**Tabelle 5: Eigenschaften der Zusammensetzungen**

| Beispiel → | **Z5** | **Z6** | **Z7** | **Z8** | **Z9** | **Z10** |
|---|---|---|---|---|---|---|
| Eigenschaft ↓ | | | | | | |
| Zugfestigkeit [MPa] | 4.03 | 3.42 | n.b. | 4.01 | 3.45 | n.b. |
| Bruchdehnung [%] | 317 | 216 | n.b. | 258 | 231 | n.b. |
| Weiterreisswiderstand [N/mm] | 5.27 | 4.96 | n.b. | 6.28 | 5.87 | n.b. |
| E-Modul 0-5% [MPa] | 2.70 | 2.48 | n.b. | 3.52 | 3.10 | n.b. |
| E-Modul 0-25% [MPa] | 2.18 | 1.99 | n.b. | 2.75 | 2.40 | n.b. |
| E-Modul 0-50% [MPa] | 1.91 | 1.73 | n.b. | 2.38 | 2.05 | n.b. |
| E-Modul 0-100% [MPa] | 1.74 | 1.56 | n.b. | 2.11 | 1.83 | n.b. |
| Auspresskraft [N] | 1'315 | 691 | > 2'500 | 1'246 | 810 | > 2'500 |
| Shore A (nach 7 Tagen bei RT) (DIN 53505:2000) | 49 | 48 | n.b. | 53 | 51 | n.b. |
| Stabile Thixotropie | Ja | Ja | Ja | Ja | Ja | Ja |

Mit den Russen Y50A (Beispiele **Z5** und **Z8**) und Y200 (Beispiel **Z6** und **Z9**) konnten Füllgrade von 15 Gew.-% bei relativ geringen Auspresskräften erreicht werden. Die insgesamt beste Leistung konnte beim Einsatz von Russ vom Typ Y50A beobachtet werden.

Des Weiteren wurden die Adhäsionseigenschaften der Zusammensetzungen **Z1 - Z10** auf folgenden Substraten geprüft: AlMgSi1, eloxiertes Aluminium, nichtrostender Stahl vom Typ V2A, faserverstärkter Kunststoff und Glaskeramik. Mit allen Russtypen wurden mit und ohne Haftvermittler (Sika® Aktivator 205) vergleichbare Adäsionseigenschaften erreicht. Die Acetylenrusse haben demnach keinen negativen Einfluss auf die Adhäsion.

### Herstellung von zweikomponentigen Zusammensetzungen

Für jede der Zusammensetzung **L1** - **L3** wurden die in Tabelle 6 angegebenen Inhaltsstoffe in den angegebenen Mengen (in Gewichtsteilen) der **Komponente-1** mittels eines Zentrifugalmischers (SpeedMixer™ DAC 150, FlackTek Inc.) vermischt und unter Ausschluss von Feuchtigkeit aufbewahrt.

Ebenso wurden die in Tabellen 6 angegebenen Inhaltsstoffe der **Komponente-2** verarbeitet und aufbewahrt.

Anschliessend wurden die beiden Komponenten jeder Zusammensetzung im angegebenen Mischungsverhältnis (0.6/1 in Gewicht) mittels des Zentrifugalmischers zu einer homogenen Flüssigkeit verarbeitet und unverzüglich geprüft.

**Tabelle 6: Zweikomponentige STP-Epoxy-Zusammensetzungen**

| Beispiel → | **L1 (Ref.)** | **L2** | **L3** |
|---|---|---|---|
| Bestanteile ↓ | | | |
| **Komponente 1** | **L1A (Ref.)** | **L2A** | **L3A** |
| Polymer **STP2** | 63.55 | 63.55 | 63.55 |
| Vinyltrimethoxysilan | 1.50 | 1.50 | 1.50 |
| 1,2-Diaminocyclohexan¹⁾ | 24.00 | 24.00 | 24.00 |
| Silquest® A-1110²⁾ | 2.25 | 2.25 | 2.25 |
| Ancamine® K54³⁾ | 1.40 | 1.40 | 1.40 |
| Tinuvin 770⁴⁾ | 0.20 | 0.20 | 0.20 |
| Irganox 1076⁵⁾ | 0.10 | 0.10 | 0.10 |
| Russ Printex 60 | 7.00 | | |
| Russ Y50A | | 7.00 | |
| Russ YS | | | 7.00 |

| **Komponente 2** | **L1B (Ref.)** | **L2B** | **L3B** |
|---|---|---|---|
| Bisphenol A-Diglycidylether⁶⁾ | 67.54 | 67.54 | 67.54 |
| Hexandiol-Diglycidylether⁷⁾ | 22.51 | 22.51 | 22.51 |
| Emulgator⁸⁾ | 0.35 | 0.35 | 0.35 |
| Wasser | 1.50 | 1.50 | 1.50 |
| Russ Printex 60 | 8.00 | | |
| Russ Y50A | | 8.00 | |
| Russ YS | | | 8.00 |
| Dibutylzinndilaurat | 0.10 | 0.10 | 0.10 |
| **Mischung** | **L1A/L1B (Ref.)** | **L2A/L2B** | **L3A/L3B** |
| Mischverhältnis⁹⁾ | 0.6/1 | 0.6/1 | 0.6/1 |

| | | | |
|---|---|---|---|
| ¹⁾ Dytek® DCH-99 (von Invista) ²⁾ 3-Aminopropyltrimethoxysilan (von Momentive) ³⁾ 2,4,6-Tris(dimethylaminomethyl)phenol (von Evonik) ⁴⁾ Bis(2,2,6,6-tetramethyl-4-piperidyl)sebacat (von BASF) ⁵⁾ Octadecyl 3-(3,5-di-tert-butyl-4-hydroxyphenyl)propionate (von BASF) ⁶⁾ Araldite® GY 250 (von Huntsman) ⁷⁾ Araldite® DY-H (von Huntsman) ⁸⁾ Disponil LS 500 (von BASF) ⁹⁾ Verhältnis Komponente 1 / Komponente 2 in Gewichtsteilen | | | |

Die Eigenschaften der Zusammensetzungen **L1**, **L2** und **L3** wurden wie bei für die Zusammensetzungen **Z1 - Z4** beschrieben bestimmt.

Die **Viskositäten** wurden auf einem wurden auf einem thermostatisierten Platten-Platten-Viskosimeter Rheotec RC30 (Plattendurchmesser 25 mm, Abstand 1 mm, Scherrate 10-100 s⁻¹) gemessen..

Die Resultate sind in der Tabelle 7 angegeben.

**Tabelle 7: Eigenschaften der zweikomponentigen Zusammensetzungen**

| Beispiel → | **L1** | **L2** | **L3** |
|---|---|---|---|
| Eigenschaft ↓ | | | |
| Zugfestigkeit [MPa] | 19.7 | 22.2 | 21.1 |
| Bruchdehnung [%] | 12.8 | 19.5 | 14.7 |
| Weiterreisswiderstand [N/mm] | 20.3 | 35.8 | 34.6 |
| E-Modul 0.5-5% [MPa] | 303.7 | 300.5 | 291.7 |
| Shore D (DIN 53505:2000) | 54 | 60 | 59 |
| Scherspannung Komponente 1 [Pa] (Scherrate 10/50/100 s⁻¹) | 217.9/810.5/ 1506.5 | 776.9/2407.6/ 4018.3 | 1855.1/5179/ 8284.4 |
| Viskosität Komponente 1 [Pa·s] (Scherrate 10/50/100 s⁻¹) | 21.79/16.21/ 15.07 | 77.69/48.15/ 40.18 | 158.5/103.58/ 82.84 |
| Scherspannung Komponente 2 [Pa] (Scherrate 10/50/100 s⁻¹) | 27.36/88.64/ 161.9 | 473.5/49.6/ 1057.1 | 1171.4/1557. 9/1968 |
| Viskosität Komponente 2 [Pa·s] (Scherrate 10/50/100 s⁻¹) | 2.74/1.77/ 1.62 | 47.35/14.99/ 10.57 | 117.14/31.16/ 19.68 |
| Scherspannung Mischung [Pa] (Scherrate 10/50/100 s⁻¹) | 269.9/873.0/ 1528.3 | 580.5/2169.6/ 3348.4 | 1793.8/ 4297.6/7179 |
| Viskosität Mischung [Pa·s] (Scherrate 10/50/100 s⁻¹) | 27.0/17.5/ 15.3 | 85.05/43.39/ 33.48 | 179.4/85.95/ 71.79 |
| Stabile Thixotropie | Nein | Ja | Ja |

Fig. 1 zeigt Abbildungen von Klebstoffraupen welche durch Austragen der Zusammensetzungen **L1A, L2A, L3A, L1B, L2B** und **L3B** hergestellt wurden. Während die Klebstoffraupen aus den Zusammensetzungen **L2A, L3A, L2B** und **L3B** mit den Acetylenrussen ihre prismatische Form behalten haben, sind die Klebstoffraupen aus den Zusammensetzungen **L1A** und **L1B** mit dem Ofenruss zerflossen.

Bei den Acetylen-Russen werden die mechanischen Eigenschaften (Zugfestigkeit, Bruchdehnung und Reissfestigkeit) erhöht. Zusätzlich ist es mit diesen Russtypen möglich, eine stabile Thixotropie zu erzeugen (siehe Fig. 1). Letzteres ist auch den gemessenen Scherspannungen und Viskositätsmessungen ersichtlich. Auch hier ist es ein grosser Vorteil, dass mit den Acetylen-Russen kein Trocknungsprozess erforderlich ist.

Bei der Verwendung von herkömmlichem Russ war es auch bei noch höheren Mengen an Russ nicht möglich eine bezüglich Thixotropie stabile A-Komponente zu erhalten.

Des Weiteren wurden die Adhäsionseigenschaften der Zusammensetzungen **L1**, **L2** und **L3** auf folgenden Substraten geprüft: AlMgSi1, eloxiertes Aluminium, nichtrostender Stahl vom Typ V2A, faserverstärkter Kunststoff und Glaskeramik. Mit allen Russtypen wurden mit und ohne Haftvermittler (Sika® Aktivator 205) vergleichbare Adäsionseigenschaften erreicht. Die Acetylenrusse haben demnach keinen negativen Einfluss auf die Adhäsion.

Zusammenfassend ist festzustellen, dass es mit Acetylen-Russ möglich ist, eine gute Thixotropie mit niedrigen Mengen an Rohmaterial in STP-Epoxy-Formulierungen zu erreichen. Dies ist mit anderen Russarten nicht in der gleichen Weise möglich. Insbesondere ist es möglich, eine Thixotropisierung der Amin- und Epoxidkomponente zu erreichen. Die mechanischen Eigenschaften werden dabei nur geringfügig beeinflusst.

Ebenso können mit Acetylen-Russ STP-Formulierungen ohne Vortrocknung bereitgestellt werden. bei vergleichbaren Anteilen an Russ sind die mechanischen Eigenschaften mit Acetylen-Russ im Vergleich mit anderen Russen besser und es wird eine effektivere Thixotropisierung erreicht.

## Patentansprüche

1. Zusammensetzung, insbesondere zur Verwendung als Klebstoff, Dichtstoff, Beschichtung oder Vergussmasse, umfassend:
- mindestens ein Silangruppen-haltiges Polymer
- mindestens einen Acetylen-Russ.

2. Zusammensetzung nach Anspruch 1, wobei der Acetylen-Russ eine Ölabsorptionszahl (OAN) von > 150 ml/100 g, bevorzugt > 200 ml/100 g, weiter bevorzugt > 250 ml/100 g, im Speziellen > 300 ml/100 g, aufweist.

3. Zusammensetzung nach wenigstens einem der Ansprüche 1 - 2, wobei der Acetylen-Russ eine BET-Oberfläche von 20 - 115 m²/g, bevorzugt 30 - 100 m²/g, im Speziellen 50 - 90 m²/g, insbesondere 60 - 80 m²/g, aufweist.

4. Zusammensetzung nach wenigstens einem der Ansprüche 1 - 3, wobei ein Kohlenstoffgehalt des Acetylen-Russ > 98 Gew.-%, insbesondere > 99 Gew.-%, bevorzugt > 99.5 Gew.-% ist.

5. Zusammensetzung nach wenigstens einem der Ansprüche 1 - 4, wobei der Acetylen-Russ in Luft mit einem Taupunkt von 12°C und einer Temperatur von 23°C eine Gleichgewichtsfeuchte von < 0.2 Gew.-% aufweist.

6. Zusammensetzung nach wenigstens einem der Ansprüche 1 - 5, wobei der Acetylen-Russ einen Anteil am Gesamtgewicht der Zusammensetzung von 5 - 20 Gew.-%, bevorzugt 8 - 18 Gew.-%, im Speziellen 10 - 15 Gew.-%, aufweist.

7. Zusammensetzung nach wenigstens einem der Ansprüche 1 - 6, wobei das Silangruppen-haltige Polymer erhalten wurde aus der Umsetzung von mindestens einem Isocyanatgruppen-haltigen Polymer und mindestens einem Amino-, Mercapto- oder Hydroxysilan, wobei bevorzugt:
- das Isocyanatgruppen-haltige Polymer einen NCO-Gehalt im Bereich von 0.25 bis 4 Gewichts-%, insbesondere 0.3 bis 3.5 Gewichts-%, aufweist, und/oder
- das Amino-, Mercapto- oder Hydroxysilan ein Aminosilan ist, insbesondere N-(3 Trimethoxysilylpropyl)aminobernsteinsäurediethylester, N-(3-Dimethoxymethylsilylpropyl)aminobernsteinsäurediethylester oder N-(3-Triethoxysilylpropyl)aminobernsteinsäurediethylester.

8. Zusammensetzung nach wenigstens einem der Ansprüche 1 - 7, wobei das Silangruppen-haltige Polymer Silangruppen der Formel (I) aufweist, 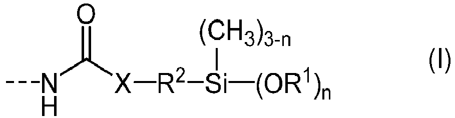 wobei
n für 1 oder 2 oder 3 steht, insbesondere für 2 oder 3,
R¹ für einen linearen oder verzweigten, einwertigen Kohlenwasserstoffrest mit 1 bis 5 C-Atomen steht,
R² für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere eine Amido-, Carbamat- oder Morpholinogruppe, aufweist, steht,
X für O oder S oder NR³ steht, wobei R³ für ein Wasserstoffatom oder einen linearen oder verzweigten Kohlenwasserstoff-Rest mit 1 bis 20 C-Atomen, welcher gegebenenfalls cyclische Anteile aufweist, und welcher gegebenenfalls eine Alkoxysilylgruppe oder Ether- oder Carbonsäureestergruppen aufweist, steht.

9. Zusammensetzung gemäss einem der Ansprüche 1 - 8, **dadurch gekennzeichnet, dass** sie zusätzlich mindestens einen weiteren Bestandteil ausgewählt aus Aminosilanen, Trocknungsmitteln, Beschleunigern, Wasser, Füllstoffen und Weichmachern enthält.

10. Zusammensetzung gemäss einem der Ansprüche 1 - 9, weiter umfassend:
- mindestens ein Epoxid-Flüssigharz und
- mindestens ein Polyamin, bevorzugt mit mindestens drei gegenüber Epoxidgruppen reaktiven Aminwasserstoffen.

11. Zusammensetzung gemäss Anspruch 10, **dadurch gekennzeichnet, dass** sie eine erste und eine zweite Komponente umfasst, welche voneinander getrennt herstellt, verpackt und gelagert werden, wobei das Polyamin nicht in der gleichen Komponente wie das Epoxid-Flüssigharz vorliegt.

12. Zusammensetzung gemäss Anspruch 11, wobei, bezogen auf das Gesamtgewicht des Acetylen-Russes in der Zusammensetzung, 30 - 70 Gew.-%, insbesondere 40 - 60 Gew.-%, des Acetylen-Russes in der ersten Komponente und 70 - 30 Gew.-%, insbesondere 60 - 40 Gew.-%, des Acetylen-Russes in der zweiten Komponente vorliegen.

13. Verwendung von Acetylen-Russ, insbesondere Acetylen-Russ wie er in einem der Ansprüche 1 - 12 beschrieben ist, zur Thixotropierung und/oder Erhöhung der Viskosität einer Zusammensetzung umfassend mindestens ein Silangruppen-haltiges Polymer, wobei es sich bei der Zusammensetzung insbesondere um ein Zusammensetzung gemäss einem der Ansprüche 1 - 12 handelt.

14. Verfahren zum Verkleben, **dadurch gekennzeichnet, dass** eine Zusammensetzung gemäss einem der Ansprüche 1 - 12 innerhalb der Topfzeit auf mindestens ein zu verklebendes Substrat appliziert wird und das Substrat innerhalb der Offenzeit zu einer Verklebung gefügt werden, gefolgt von der Aushärtung der Zusammensetzung.

15. Artikel, erhalten aus der Verwendung gemäss einem der Ansprüche 13 oder einem Verfahren gemäss Anspruch 14.
